# EUROPEAN PATENT SPECIFICATION

(11) **EP 2 765 848 B1**
(45) Date of publication and mention of the grant of the patent: **06.09.2017**
(21) Application number: 12769129.3
(22) Date of filing: 09.10.2012
(51) Int. Cl.: A01D 89/00

(54) **PICK-UP WITH MOVABLE WINDGUARD**
PICK-UP MIT BEWEGBAREM NIEDERHALTER
PICK-UP AVEC DISPOSITIF MOBILE DE GUIDAGE

(30) Priority: 10.10.2011 BE 201100596
(43) Date of publication of application: 20.08.2014
(73) Proprietor: CNH Industrial Belgium nv, 8210 Zedelgem (BE)
(72) Inventor: VANDAMME, Dirk A., R., B-8370 Uitkerke (BE); CHOLUJ, Mariusz, PL-09-400 Plock (PL)
(74) Representative: CNH Industrial IP Department
(86) International application number: PCT/EP2012/069926
(87) International publication number: WO 2013/053682

(56) References cited:
- DE-A1- 19 918 552
- DE-B- 1 254 398
- US-A1- 2008 163 600
- US-A1- 2009 139 195
- US-B1- 6 935 094

## Description

### Field of the invention

The present invention relates to agricultural machines, for example agricultural balers, having a pick-up assembly for gathering crop material. More specifically it relates to such pick-up assemblies having a movable windguard.

### Background of the invention

Certain agricultural machines, such as balers and forage harvesters, are required to collect crop material, that has been cut, from the field. The component of such agricultural machines which gathers the crop material and feeds it further into the machine for processing is generally known as a pick-up assembly. A pick-up assembly typically comprises a pick-up drum rotatably mounted on a frame, with radially arranged projecting spikes to collect the crop material and propel it upwards, past a guiding element and then into a feed channel through which the crop material is conveyed into the machine for subsequent processing, such as baling, threshing, chopping, storing and/or depositing. This guiding element is generally referred to as a windguard, and serves the purposes of restricting the movement of the collected crop material in the forward and upward direction, shielding the crop flow path from wind influence and guiding the crop material efficiently into the feed channel.

Known windguard designs may be as simple as a deflector, e.g. comprising a flat sheet metal plate or an arrangement of such plates. Alternatively, a windguard may comprise a roller extending transversely across the width of the pick-up assembly located above and forward of the pick-up drum. Such roller, which can for example be rotatably mounted at its opposite ends on two support arms, may guide the crop material more efficiently along a well-defined crop flow path compared to a simple deflector, e.g. with reduced resistance to crop flow. The support arms are typically pivotable relative to the frame of the pick-up assembly so that the gap between the roller and the pick-up drum may increase as the flow of crop material increases.

To guide and contain the crop material, known windguards may furthermore comprise a guiding element with tines that extend parallel to the direction of crop flow. For example, the tines may be mounted on a crossbar secured to the two support arms carrying the windguard.

The position of the windguard, e.g. the position of the roller, is generally adjustable to select a minimum gap between the pick-up drum and windguard that is appropriate for the travelling speed of the agricultural machine and the properties of the crop material being gathered, e.g. the windrow density. Furthermore, lifting of the windguard may be required to enable easy access, e.g. for maintenance or to remove jammed material. In order to adjust the position of the windguard, in conventional systems the inclination angle of the pivotable support arms on which the windguard is mounted may be altered, e.g. by means of a chain which on one side may be connected to the windguard, e.g. fixed to the support arms, and which may be removably attached by an appropriate chain link to a hook, e.g. to a hook mounted on the frame of the pick-up, thus obtaining the desired windguard position. Such an arrangement is shown in US 2008/0163600 or US 6 935 094. However, such suspension arrangements may have disadvantages, such as: adjustment of the windguard position is typically a bimanual operation, involving the lifting of the, often heavy, windguard while unhooking and reattaching the chain; the adjustment of the windguard position is limited to discrete points, e.g. determined by the chain link size; the remaining loose end of the chain may block the windguard or cause damage by swinging against parts of the pick-up, e.g. cause denting or stripping of paint; and fragments of the chain produced by a chain break may endanger bystanders and severely damage the pick-up.

In US2009/0139195A1, an automated arrangement is disclosed in which a first hydraulic actuator is used to control the position of the windguard. This pick-up arrangement furthermore comprises a second actuator for adjusting the position of the pick-up drum, and control components for driving both actuators, e.g. for switching the configuration of the windguard and the pick-up drum between a non-operating position and an operating position.

### Summary of the invention

It is an object of embodiments of the present invention to provide efficient means for adjustment of the position of a windguard in a pick-up assembly.

The above objective is accomplished by a method and device according to the present invention.

In a first aspect, the present invention provides an agricultural machine comprising a pick-up assembly for gathering crop material, the pick-up assembly comprising a pick-up drum rotatably mounted to a frame, a windguard attached to a support linkage, said support linkage being pivotably mounted to the frame, and at least one flexible elongate element having opposite first and second end regions, in which the first end region is attached to the support linkage. The pick-up assembly furthermore comprises at least one winch drum rotatably attached with respect to the frame, the second end region of the at least one flexible elongate element is windably attached to the at least one winch drum, and a shock attenuating coupling for attaching said first end region of the at least one flexible elongate element to the support linkage.

It is an advantage of embodiments of the present invention that a pick-up assembly is provided with a simple and robust mechanism for adjustment of the position of the windguard.

It is an advantage of embodiments of the present invention that a pick-up assembly is provided in which the position of the windguard may be adjusted in a comfortable and ergonomic manner.

It is an advantage of embodiments of the present invention that a cost-efficient arrangement for adjustment of the pick-up assembly position is provided.

It is an advantage of embodiments of the present invention that a pick-up assembly is provided in which the position of the windguard is continuously adjustable.

It is an advantage of embodiments of the present invention that a pick-up assembly is provided that may require little maintenance.

It is an advantage of embodiments of the present invention that a pick-up assembly is provided in which the position of the windguard may be remotely adjusted, e.g. controlled from a towing vehicle.

It is an advantage of embodiments of the present invention that a pick-up assembly is provided which is robust and shock resilient. In an agricultural machine according to embodiments of the present invention the shock attenuating coupling may comprise a spring. In the agricultural machine according to embodiments of the present invention, the support linkage may comprise two lateral support arms and a crossbar mounted between said lateral support arms, the crossbar extending transversally to the intended direction of crop flow. In such pick-up assembly, the first end region of the at least one flexible elongate element may be attached to the crossbar. In particular embodiments of the present invention, the at least one flexible elongate element may comprise two flexible elongate elements each having first end regions attached to the crossbar at opposite lateral sides of the crossbar. Both of said two flexible elongate elements may have said second end regions attached to the same winch drum.

An agricultural machine according to embodiments of the present invention may furthermore comprise a plurality of tines mounted at one end to the crossbar and projecting with their free end downstream in the intended direction of crop flow. The crossbar may be pivotably mounted to the two lateral support arms for allowing a range of free movement of the free extremities of the tines.

In an agricultural machine according to embodiments of the present invention, the winch drum may furthermore comprise a crank for rotating the winch drum so as to adjust the position of the windguard relative to the pick-up drum.

In an agricultural machine according to embodiments of the present invention, the winch drum may furthermore comprise a latch and/or a ratchet for releasably blocking unidirectional and/or bidirectional rotation of the winch drum.

In embodiments of the present invention, the winch drum may furthermore comprise an actuator for rotating the winch drum so as to adjust the position of the windguard relative to the pick-up drum. Said actuator may for example be an electric motor or a gear motor. Embodiments of the present invention may furthermore comprise a control unit for remotely controlling said actuator.

In a second aspect, the agricultural machine according to embodiments of the first aspect of the present invention is a baler.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 shows a schematic representation of a square baler, as one type of agricultural machine onto which a pick-up assembly according to embodiments of the present invention may be used.
FIG. 2 shows a schematic side view of a pick-up assembly according to a first exemplary embodiment of the first aspect of the present invention.
FIG. 3 shows a perspective view of a pick-up assembly according to the first exemplary embodiment of the first aspect of the present invention.
FIG. 4 shows a front view of the windguard position adjustment components of a pick-up assembly according to embodiments of the present invention.
FIG. 5 shows a side view of the windguard position adjustment components of a pick-up assembly as in FIG. 4.
FIG. 6 shows a crank and engaged latch for use in a pick-up assembly according to embodiments of the present invention.
FIG. 7 shows a crank and disengaged latch for use in a pick-up assembly according to embodiments of the present invention.
FIG. 8 shows the crank and latch of FIG. 7 after rotation of the crank.
FIG. 9 shows the crank and latch of FIG. 8 after latching.
FIG. 10 shows a perspective view of the crank and engaged latch of FIG. 6 for use in a pick-up assembly according to embodiments of the present invention.
FIG. 11 shows a perspective view of the crank and disengaged latch of FIG. 7 for use in a pick-up assembly according to embodiments of the present invention.
FIG. 12 shows a perspective view of a pick-up assembly having a shock-attenuating or shock-absorbing coupling according to the first aspect of the present invention.
FIG. 13 shows a side view of a shock-attenuating or shock-absorbing coupling in a pick-up assembly according to the first aspect of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to balers, reference is made to machines for forming bales from agricultural crop material, such as forming rectangular bales by any suitable means, e.g. plungers, or forming cylindrical bales, e.g. by winding and pressing.

Where in embodiments of the present invention reference is made to pick-up assemblies, reference is made to assemblies which are adapted for picking up crop material, e.g. a windrow, from the ground and feeding it into a subsequent processing unit, e.g. a baling chamber, of an agricultural machine, for example an agricultural harvesting machine, such as a baler.

Where in embodiments of the present invention reference is made to a windguard, reference is made to a device that ensures that crop material is properly fed into the baling chamber in spite of any wind or varying crop conditions. Typically, the windguard comprises a pipe and a series of tines affixed thereto, held in position above and in front of the pick-up assembly. The pipe may be raised or lowered by adjusting an adjustment mechanism.

Where in embodiments of the present invention reference is made to crop material, reference is made to any suitable type of biomass that can be harvested and packed in bales, such as for example hay, silage, straw or other.

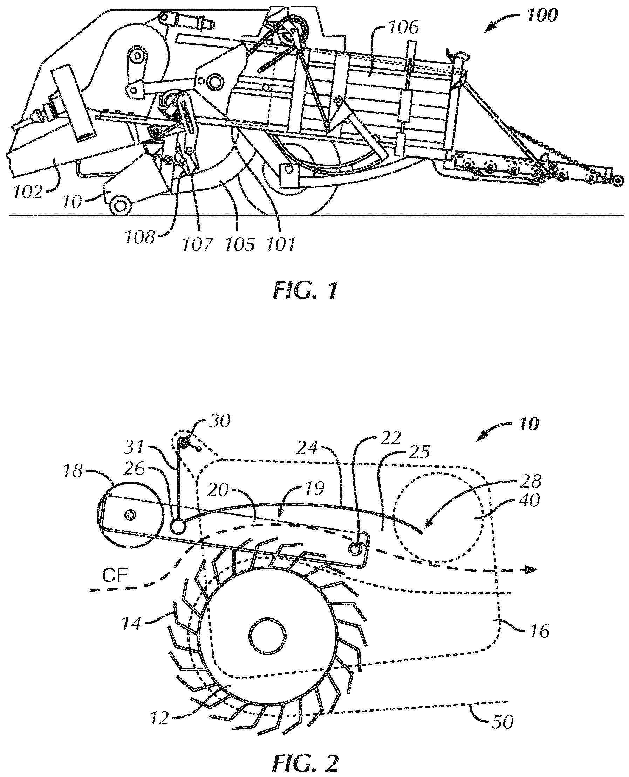

The present invention relates to pick-up assemblies for agricultural machines. Referring to the drawings, FIG. 1 shows such an exemplary agricultural machine having a pick-up assembly, in the form of a schematic representation of a baler 100 as known in the art. The agricultural baler 100 comprises a frame 101 which is equipped with a forwardly extending tongue 102 at its front end with hitch means (not shown) for coupling the baler 100 to a towing tractor. A pick-up assembly 10 lifts windrowed crop material off the field as the baler 100 is travelled there over and delivers such material into the front end of a rearwardly and upwardly curved, charge-forming feeder duct 105. The duct 105 communicates at its upper end with an overhead, fore-and-aft extending bale-forming chamber 106 into which crop charges are loaded by a cyclically operating stuffer mechanism 107. The bale-forming chamber 106 illustrated is one of a rectangular baler, the invention, however, not being limited thereto. In alternative embodiments, the bale-forming chamber could be one of a round baler. In yet alternative embodiments, the pick-up assembly 10 could be coupled to an agricultural machine which is not a baler, but which nevertheless accepts picked-up crop material, such as for example a forage harvester or a combine harvester.

A continuously operating packer mechanism 108 at the lower front end of the feeder duct 105 continuously feeds and packs material into the duct 105 as to cause charges of the crop material to take on and assume the internal configuration of the duct 105 prior to periodic engagement by the stuffer mechanism 107 and insertion up into the bale-forming chamber 106. The feeder duct 105 may be equipped with means (not illustrated) for establishing whether a complete charge has been formed therein and operating the stuffer mechanism 107 in response thereto. Each action of the stuffer mechanism 107 introduces a "charge" or "flake" of crop material from the duct 105 into the chamber 106.

Generally, a towing vehicle, e.g. a tractor, pulls the baler 100 over a windrow of previously cut crop. The pick-up assembly 10 in co-operation with the charge feeder duct 105 inserts the crop into the baling-forming chamber 106. When the bale-forming chamber 106 is full, a packaging system engages and packs the bale, e.g. by wrapping or tying. Once the bale is packed, it is ejected from the bale-forming chamber 106.

In a first aspect, the present invention relates to a pick-up assembly 10 for an agricultural machine 100, such as, but not limited to, the baler schematically depicted in FIG. 1. A first embodiment of such a pick-up assembly 10 is shown in FIG. 2 to FIG. 5. This pick-up assembly 10 comprises a pick-up drum 12, rotatably mounted to a frame 16, for gathering crop material, e.g. for picking up windrows from a field travelled over by the agricultural machine 100, and feeding the gathered crop material further into the agricultural machine 100 for processing. The pick-up drum 12 may be provided with projecting spikes 14 for taking hold of crop material from the field while the pick-up drum 12 is rotating horizontally at a level close to ground, and propelling gathered crop material in a generally upward and rearward direction.

The pick-up assembly 10 furthermore comprises a windguard 18 for ensuring proper feeding of said crop material along the intended direction of crop flow CF, e.g. into a feeder duct 105 for further processing of the crop material. The windguard 18 may be provided forward of the main drum 12, with respect to an intended direction of crop flow CF, and at a level higher than the axis of rotation of the main drum 12. The windguard 18 may be constructed as a roller, e.g. a roller supported at each of its opposite ends on a support arm 20. In embodiments of the present invention, the windguard 18 may extend transversally to the intended direction of crop flow CF.

A pick-up assembly 10 according to the first aspect of the present invention furthermore comprises a support linkage 19, which is pivotably mounted to the frame 16, and supports the windguard 18. This support linkage 19 may for example comprise two lateral support arms 20, pivotably mounted to the frame 16, for supporting the windguard 18 in an adjustable position, e.g. an adjustable position on an arc generally forward and/or above the pick-up drum 12. Thus, the lateral support arms 20 may be pivotable relative to the frame 16 of the pick-up 10, e.g. about pins 22. The windguard 18 may be mounted at a free end of the support arms 20 opposite the ends where the arms 20 are pivotable, e.g. about the pins 22.

The support linkage 19 may furthermore comprise a crossbar 26 mounted between the two lateral support arms 20, for example pivotably mounted to the two lateral support arms 20. Such a crossbar 26 may extend transversally to the intended direction of crop flow CF. A plurality of tines 24 may be mounted at one end to the crossbar 26 and may project with their free end extremities 28 downstream in the intended direction of crop flow CF. The plurality of spaced tines 24 may act as a guide along a guide floor 50, comprising for example plates such as e.g. metal plates for guiding crop material, to define a crop flow channel 25 downstream of the windguard 18.

Two augers 40 may be arranged one on each side of the pick-up assembly 10, in a transversal direction thereof, to push crop towards the centreline of the pickup 10 in transversal direction. The extremities 28 of the tines 24 may terminate in the space between the two augers 40. When the crossbar 26 is pivotably mounted to the two lateral support arms 20, the free extremities 28 of the tines 24 may swivel over a range. This range of free movement may be purposefully limited, for example by allowing the crossbar 26 to rotate over a limited arc, e.g. by providing stops. Thus the tines 24 may be pushed upward to accommodate a temporary surge in crop material influx, to return under the force of gravity after such surge.

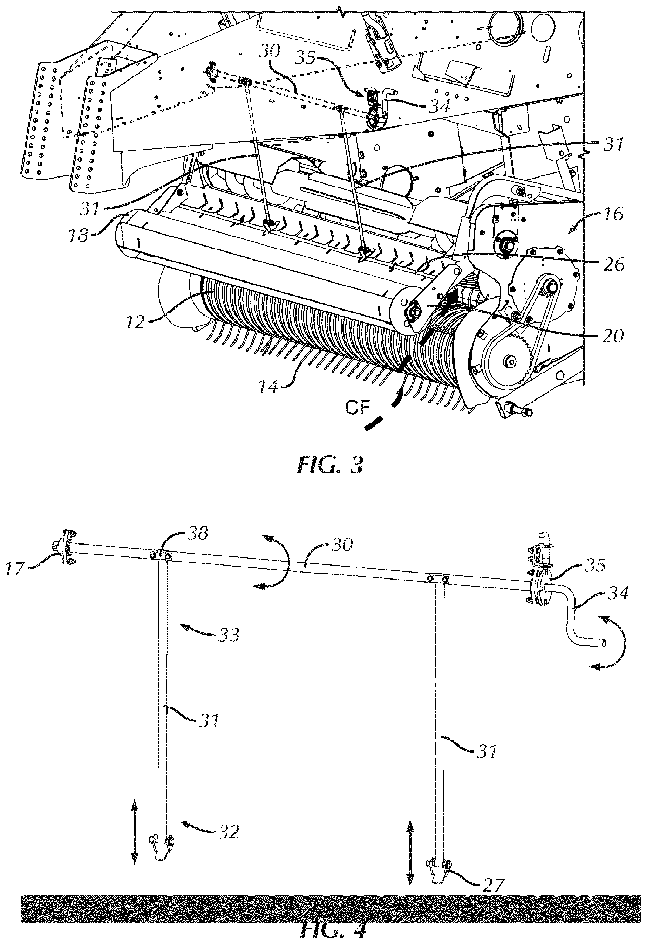

A pick-up assembly 10 according to embodiments of the first aspect of the invention furthermore comprises at least one winch drum 30 rotatably attached to a frame, so as to be rotatable with respect to the frame 16, e.g. rotatably attached to the frame 16, for example a winch drum extending transversally to the intended direction of crop flow CF. This at least one winch drum 30 may for example be a cylinder, freely rotatable around an axis, in which the axis may be supported, directly or through an intermediate linkage structure, by a frame, e.g. the frame 16, of the pick-up assembly 10. In other embodiments, the at least one winch drum 30 may for example be a cylinder, e.g. a cylindrical metal bar or pipe, which may be held in at least one fork or holder 17, such as shown in FIG. 4, e.g. held by a pair of holders having roller elements, which may form part of the frame, e.g. the frame 16, or may be directly or indirectly connected thereto, e.g. welded or secured by any appropriate fastening means, e.g. screws.

The pick-up assembly 10 further comprises at least one flexible elongate element 31 having opposite first 32 and second 33 end regions. The first end region 32 is directly or indirectly attached to the support linkage 19, for example to the crossbar 26 thereof, e.g. by a clamping device 27, and the second end region 33 is windably attached to the at least one winch drum 30, in such way that the position of the windguard 18 may be adjusted by rotating the at least one winch drum 30, e.g. by winding and unwinding the at least one flexible elongate element 31 around the winch drum 30.

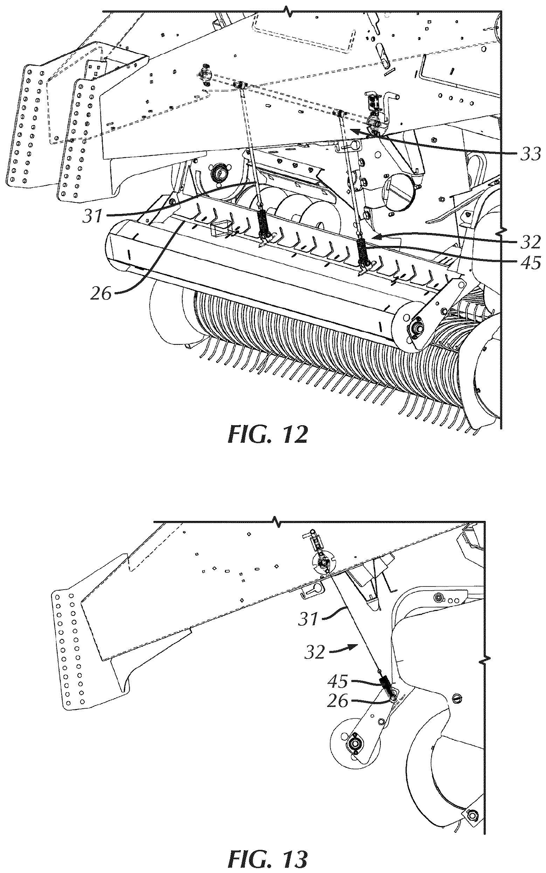

Referring to FIG. 12 and FIG. 13, according to the present invention the first end region 32 is attached to the support linkage 19 by means of a shock attenuating coupling 45, such as a spring, e.g. a coiled metal wire spring. The adjustable length of the unwound part of the at least one flexible elongate element 31 defines a lower limit to the vertical position of the windguard 18, i.e. by keeping the flexible elongate element 31 taut under the force of gravity. However, because the support linkage 19 and the windguard 18 may be thrust upward when the pick-up assembly 10 travels over uneven ground, the at least one flexible elongate element 31 may be subject to strong force peaks. Attaching the first end region 32 to the support linkage 19 through a shock attenuating coupling 45 may reduce such strong force peaks, and may therefore avoid breakage of the flexible elongate element 31 and/or other mechanical damage to components of the windguard 18 caused by such strong force peaks.

The at least one flexible elongate element 31 may for example be a cord, a rope or a chain. In embodiments of the present invention, the at least one flexible elongate element 31 may be a belt, e.g. a long rectangular strip of an appropriate flexible material with sufficient tensile strength. The elongate element 31 may for example be entirely or partially made out of: rubber, leather, glass fiber, thermosoftening plastics, e.g. nylon, polyester, polyvinyl chloride, silicone or polyethylene, fabric materials, e.g. canvas or cotton, metals, e.g. stainless steel or carbon steel, or combinations thereof. The winch drum 30 may be adapted for accommodating the at least one flexible elongate element 31 in a wound-up form. In particular, the winch drum 30 may have at least one attachment point for attaching the elongate element 31, for example by providing a slot which can receive and tightly hold the elongate element 31, or by providing other appropriate fastening elements 38, such as a screw or a pin. The winch drum 30 may be adapted for holding the flexible elongate element 31 in wound-up state, e.g. by providing radial flanges.

In particular embodiments of the first aspect of the invention, e.g. in the first exemplary embodiment shown in FIG. 2 to FIG. 5, the pick-up assembly 10 may comprise two flexible elongate elements 31, both having the first end region 32 attached to the support linkage 19, e.g. to the crossbar 26 thereof. By attaching the two flexible elongate elements 31 at opposite lateral sides of the crossbar 26, the weight of the windguard 18 may be distributed evenly between the flexible elongate elements 31. Both of said two flexible elongate elements 31 may have their respective second end region 33 attached a winch drum 30. A separate winch drum may be provided for each elongate element 31. Alternatively, both flexible elongate elements 31 may have their respective second end region 33 attached to the same winch drum 30, e.g. as shown in the frontal view in FIG. 4. Particularly, the winch drum 30 may have two separate zones adapted for receiving the two flexible elongate elements 31, e.g. two attachment points and their corresponding fastening elements 38 at opposite lateral sides of the crossbar 26 and/or two pairs of radial flanges for guiding and holding the two flexible elongate elements 31. A common winch drum 30 for the plurality of flexible elongate elements 31 is advantageous in that it is easier to operate. In such embodiments, the windguard 18 may be raised and lowered by turning the single winch drum 30 without compromising the horizontal alignment and balance.

In the first exemplary embodiment, illustrated in FIG. 2 to FIG. 5, the winch drum 30 furthermore comprises a crank 34 for manually rotating the winch drum 30 so as to adjust the position of the windguard 18 relative to the pick-up drum 12. This provides a robust and easily maintained mechanism for raising and lowering the wind guard 18. The winch drum 30 may furthermore comprise a latch 35 and/or a ratchet for releasably blocking unidirectional and/or bidirectional rotation of the winch drum 30. For example, the latch 35 may comprise an attachment point, e.g. formed by an eye, on the rotatable part of the winch drum 30 whereto a hook, linked to a stationary part of the winch drum 30, may be attached. Of course the eye and the hook can have switched positions, i.e. the hook on the rotatable part of the winch drum 30 ad the eye linked to the stationary part.

In alternative embodiments, the latch 35 may for example comprise at least one radial protrusion on the winch drum, and a non-rotating concave element, e.g. stationary with respect to the frame, e.g. the frame 16, for reversibly and repeatedly engaging such protrusion.

Alternatively, the latch 35 may for example comprise at least one radial indent in the winch drum, and a non-rotating protrusion, e.g. stationary with respect to the frame 16, for reversibly and repeatedly engaging such indent.

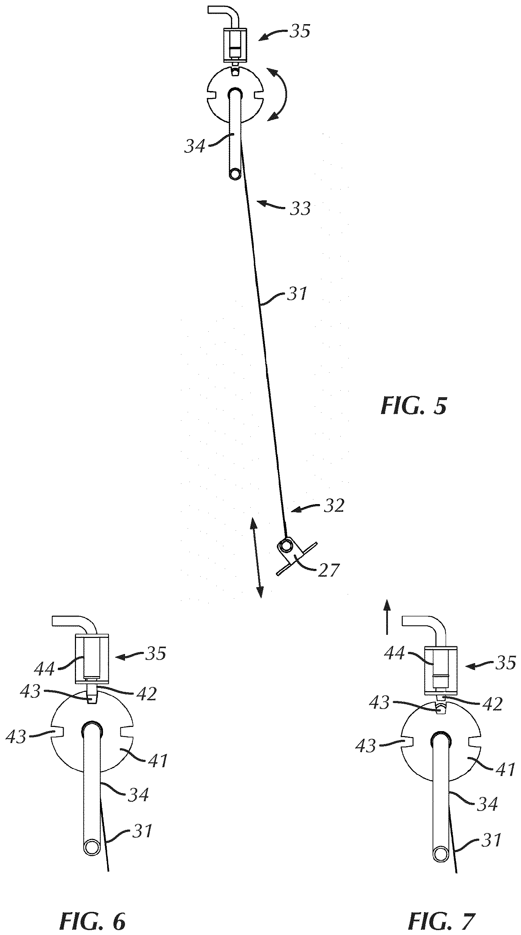

In the particular embodiment shown in FIG. 2 to FIG. 5, the latch 35 comprises a disc 41 attached to the winch drum 30, e.g. a metal disc fastened or welded to the winch drum 30, for example oriented concentrically and perpendicular to the exterior surface of the winch drum 30. This disc 41 is provided with one or more radial indents 43, e.g. four indents spaced at 90° angles, in which a protrusion 42 may engage. This configuration is shown in detail in FIG. 6 to FIG. 11. The number of indents 43 determines the height difference between two subsequent positions of the windguard 18. The indents 43 may be spaced regularly over the circumference of the disc 41, or an irregular spacing may be provided between the indents 43.

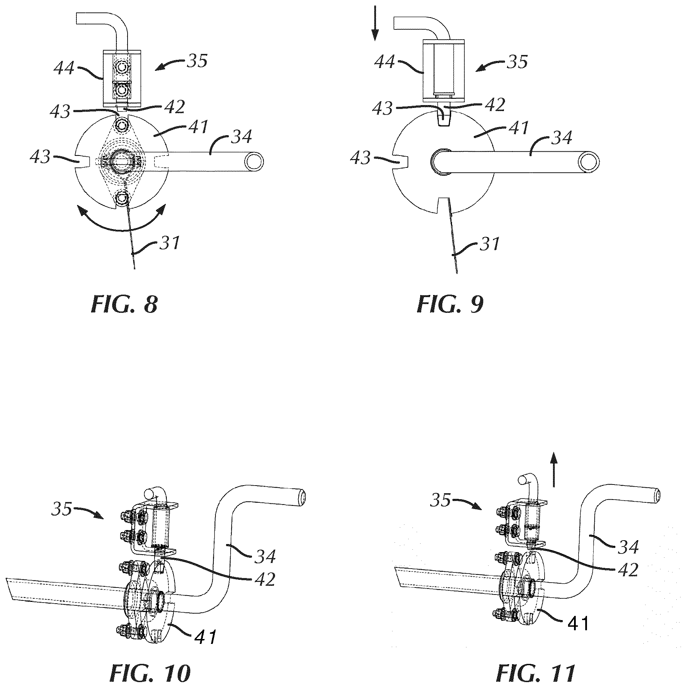

The operation of such latch 35 can be observed in the sequence of FIG. 6 to FIG. 9. In FIG. 6 the flexible elongate element 31 is in an initial position, while the latch 35 is engaged, i.e. the protrusion 42 is inserted into an indent 43 of the disc 41 to obstruct rotation of the winch drum 30. By removing the protrusion 42 out of the indent 43, shown in FIG. 7, the winch drum 30 may freely rotate, or may be caused to be rotated. By turning the crank 34, the flexible elongate element 31 is wound or unwound to a new position, different from the initial position, for example shown in FIG. 8. Finally, the winch drum 30 may be locked in this new position by inserting the protrusion 42 into an indent 43 of the disc 41, as illustrated in FIG. 9. Hereto, the latch 35 may be provided with a spring 44 or a turn-and-lock system. 3D views of the latch 35 in blocked and unblocked position are shown in FIG. 10 and FIG. 11, respectively.

In a second exemplary embodiment, not illustrated in the drawings, the winch drum 30 may comprise an actuator, e.g. an electric motor, for example a mass-produced, low-cost electric motor such as typically used for windshield wipers, e.g. a gear motor, for rotating the winch drum 30 so as to adjust the position of the windguard 18 relative to the pick-up drum 12. It may be advantageous to control such actuator remotely. The pick-up assembly 10 may therefore comprise a control unit for remotely controlling, e.g. remotely controlling, the actuator. Such control unit may be operated from a tractor cab pulling the agricultural machine 100 provided with the pick-up assembly 10 according to embodiments of the present invention, thereby increasing the comfort of an operator controlling both the towing vehicle and the position adjustment system of the windguard 18.

In a second aspect, the present invention relates to a baler 100 having a pick-up assembly 10 according to the first aspect of the present invention.

## Claims

1. An agricultural machine (100) comprising a pick-up assembly (10) for gathering crop material, the pick-up assembly (10) comprising:
- a pick-up drum (12) rotatably mounted to a frame (16);
- a windguard (18) attached to a support linkage (19), said support linkage (19) being pivotably mounted to the frame (16); and
- at least one flexible elongate element (31) having opposite first (32) and second (33) end regions, in which the first end region (32) is attached to the support linkage (19); **characterized in that** the pick-up assembly (10) furthermore comprises:
- at least one winch drum (30) rotatably attached with respect to a frame (16, 101), the second end region (33) of the at least one flexible elongate element (31) is windably attached to the at least one winch drum (30); and
- a shock attenuating coupling (45) for attaching said first end region (32) of the at least one flexible elongate element (31) to the support linkage (19).

2. The agricultural machine (100) according to claim 1, wherein the shock attenuating coupling (45) comprises a spring.

3. The agricultural machine (100) according to claim 1 or 2, in which the support linkage (19) comprises two lateral support arms (20) and a crossbar (26) mounted between said lateral support arms (20), the crossbar (26) extending transversally to the intended direction of crop flow (CF).

4. The agricultural machine (100) according to claim 3, wherein said first end region (32) is attached to the crossbar (26).

5. The agricultural machine (100) according to claim 4, wherein the at least one flexible elongate element (31) comprises two flexible elongate elements (31) having first end regions (32) attached to the crossbar (26) at opposite lateral sides of the crossbar (26).

6. The agricultural machine (100) according to claim 5, wherein both of said two flexible elongate elements (31) have said second end regions (33) attached to the same winch drum (30).

7. The agricultural machine (100) according any of claims 3 to 6, furthermore comprising a plurality of tines (24) mounted at one end to the crossbar (26) and projecting with their free end (28) downstream in the intended direction of crop flow (CF), and wherein the crossbar (26) is pivotably mounted to the two lateral support arms for allowing a range of free movement of the free extremities (28) of the tines (24).

8. The agricultural machine (100) according to any of the previous claims, in which the winch drum (30) furthermore comprises a crank (34) for rotating the winch drum (30) so as to adjust the position of the windguard (18) relative to the pick-up drum (12).

9. The agricultural machine (100) according to any of the previous claims, in which the winch drum (30) furthermore comprises a latch (35) and/or a ratchet for releasably blocking unidirectional and/or bidirectional rotation of the winch drum (30).

10. The agricultural machine (100) according to any of the previous claims, in which the winch drum (30) furthermore comprises an actuator for rotating the winch drum (30) so as to adjust the position of the windguard (18) relative to the pick-up drum (12).

11. The agricultural machine (100) according to claim 10, in which said actuator is an electric motor.

12. The agricultural machine (100) according to claim 11, wherein the actuator is a gear motor.

13. The agricultural machine (100) according to any of claims 10 to 12, furthermore comprising a control unit for remotely controlling said actuator.

14. The agricultural machine (100) according to any of the previous claims, in which the at least one winch drum (30) is rotatably attached to the frame (16) of the pick-up assembly (10).

15. The agricultural machine (100) according to any of the claims 1 to 13, in which the at least one winch drum (30) is rotatably attached to the frame (101) of the agricultural machine (100).

16. The agricultural machine (100) according to any of the previous claims, in which the agricultural machine is a baler (100).

## Patentansprüche

1. Landwirtschaftsmaschine (100) mit einer Pickup-Anordnung (10) zum Aufsammeln von Erntegut, wobei die Pickup-Anordnung (10) aufweist:
- eine Pickup-Trommel (12), die drehbar an einem Rahmen (16) befestigt ist;
- einen Windschutz (18), der an einem Traggestänge (19) befestigt ist, wobei das Traggestänge (19) schwenkbar am Rahmen (16) befestigt ist; und
- wenigstens ein flexibles längliches Element (31) mit erstem (32) und zweitem (33) Endbereich, die entgegengesetzt angeordnet sind, wobei der erste Endbereich (32) am Traggestänge (19) befestigt ist;
**dadurch gekennzeichnet, dass**
die Pickup-Anordnung (10) außerdem aufweist:
- wenigstens eine Windentrommel (30), die drehbar bezüglich eines Rahmens (16, 101) befestigt ist, wobei der zweite Endbereich (33) des wenigstens einen flexiblen länglichen Elements (31) aufwickelbar an der wenigstens einen Windentrommel (30) befestigt ist; und
- eine Erschütterungsdämpfungskopplung (45) zur Befestigung des ersten Endbereichs (32) des wenigstens einen flexiblen länglichen Elements (31) am Traggestänge (19).

2. Landwirtschaftsmaschine (100) nach Anspruch 1, wobei die Erschütterungsdämpfungskopplung (45) eine Feder aufweist.

3. Landwirtschaftsmaschine (100) nach Anspruch 1 oder 2, wobei das Traggestänge (19) zwei seitliche Tragarme (20) und eine Querstrebe (26), die zwischen den seitlichen Tragarmen (20) befestigt ist, aufweist, wobei sich die Querstrebe (26) quer zur beabsichtigten Richtung des Erntestroms (CF) erstreckt.

4. Landwirtschaftsmaschine (100) nach Anspruch 3, wobei der erste Endbereich (32) an der Querstrebe (26) befestigt ist.

5. Landwirtschaftsmaschine (100) nach Anspruch 4, wobei das wenigstens eine flexible längliche Element (31) zwei flexible längliche Elemente (31) aufweist, deren erste Endbereiche (32) an gegenüberliegenden seitlichen Seiten der Querstrebe (26) an der Querstrebe (26) befestigt sind.

6. Landwirtschaftsmaschine (100) nach Anspruch 5, wobei die zweiten Endbereiche (33) beider flexiblen länglichen Elemente (31) an derselben Windentrommel (30) befestigt sind.

7. Landwirtschaftsmaschine (100) nach einem der Ansprüche 3 bis 6, außerdem mit einer Mehrzahl von Zinken (24), die an einem Ende an der Querstrebe (26) befestigt sind und mit ihrem freien Ende (28) stromabwärts in der beabsichtigten Richtung des Erntestroms (CF) abragen, und wobei die Querstrebe (26) schwenkbar an den zwei seitlichen Tragarmen befestigt ist, um einen Bereich freier Bewegung der freien Extremitäten (28) der Zinken (24) zu ermöglichen.

8. Landwirtschaftsmaschine (100) nach einem der vorangehenden Ansprüche, wobei die Windentrommel (30) außerdem eine Kurbel (34) zum Drehen der Windentrommel (30) aufweist, um die Position des Windschutzes (18) relativ zur Pickup-Trommel (12) einzustellen.

9. Landwirtschaftsmaschine (100) nach einem der vorangehenden Ansprüche, wobei die Windentrommel (30) außerdem eine Klinke (35) und/oder ein Rastmittel zum lösbaren Blockieren einer Drehung der Windentrommel (30) in einer Richtung und/oder in beiden Richtungen aufweist.

10. Landwirtschaftsmaschine (100) nach einem der vorangehenden Ansprüche, wobei die Windentrommel (30) außerdem ein Betätigungselement zum Drehen der Windentrommel (30) aufweist, um die Position des Windschutzes (18) relativ zur Pickup-Trommel (12) einzustellen.

11. Landwirtschaftsmaschine (100) nach Anspruch 10, wobei das Betätigungselement ein elektrischer Motor ist.

12. Landwirtschaftsmaschine (100) nach Anspruch 11, wobei das Betätigungselement ein Getriebemotor ist.

13. Landwirtschaftsmaschine (100) nach einem der Ansprüche 10 bis 12, außerdem mit einer Steuereinheit zur Fernsteuerung des Betätigungselements.

14. Landwirtschaftsmaschine (100) nach einem der vorangehenden Ansprüche, wobei die wenigstens eine Windentrommel (30) drehbar am Rahmen (16) der Pickup-Anordnung (10) befestigt ist.

15. Landwirtschaftsmaschine (100) nach einem der Ansprüche 1 bis 13, wobei die wenigstens eine Windentrommel (30) drehbar am Rahmen (101) der Landwirtschaftsmaschine (100) befestigt ist.

16. Landwirtschaftsmaschine (100) nach einem der vorangehenden Ansprüche, wobei die Landwirtschaftsmaschine eine Ballenpresse (100) ist.

## Revendications

1. Machine agricole (100) comprenant un ensemble de ramassage (10) pour collecter un matériau de récolte, l'ensemble de ramassage (10) comprenant :
- un cylindre de ramassage (12) monté de façon à pouvoir tourner sur une structure (16),
- un pare-vent (18) fixé à une liaison de support (19), ladite liaison de support (19) étant montée de façon pivotante sur la structure (16), et
- au moins un élément allongé flexible (31) comportant des première (32) et seconde (33) régions d'extrémité opposées, la première région d'extrémité (32) étant fixée à la liaison de support (19),
**caractérisée en ce que** l'ensemble de ramassage (10) comprend en outre :
- au moins un tambour de treuil (30) fixé de façon à pouvoir tourner par rapport à une structure (16, 101), la seconde région d'extrémité (33) du au moins un élément flexible allongé (31) étant fixée de façon enroulable à au moins un tambour de treuil (30), et
- un raccord atténuant les chocs (45) pour fixer ladite première région d'extrémité (32) du au moins un élément flexible allongé (31) à la liaison de support (19).

2. Machine agricole (100) selon la revendication 1, dans laquelle le raccord atténuant les chocs (45) comprend un ressort.

3. Machine agricole (100) selon la revendication 1 ou 2, dans laquelle la liaison de support (19) comprend deux bras de support latéraux (20) et une barre transversale (26) montée entre les dits bras de support latéraux (20), la barre transversale (26) s'étendant transversalement à la direction souhaitée du flux de récolte (CF).

4. Machine agricole (100) selon la revendication 3, dans laquelle ladite première région d'extrémité (32) est fixée à la barre transversale (26).

5. Machine agricole (100) selon la revendication 4, dans laquelle le au moins un élément flexible allongé (31) comprises deux éléments allongés flexibles (31) comportant des premières régions d'extrémité (32) fixées à la barre transversale (26) à des côtés latéraux opposés de la barre transversale (26).

6. Machine agricole (100) selon la revendication 5, dans laquelle les deux dits éléments allongés flexibles (31) ont des dites secondes régions d'extrémité (33) qui sont fixées au même tambour de treuil (30).

7. Machine agricole (100) selon l'une quelconque des revendications 3 à 6, comprenant en plus une pluralité de dents (24) montées à une extrémité de la barre transversale (26) et faisant saillie à leur extrémité libre (28) en aval dans la direction souhaitée du flux de récolte (CF), et en ce que la barre transversale (26) est montée de façon pivotante sur les deux bras de support latéraux pour permettre une amplitude de mouvement libre des deux extrémités libres (28) des dents (24).

8. Machine agricole (100) selon l'une quelconque des revendications précédentes, dans laquelle le tambour de treuil (30) comprend en outre une manivelle (34) pour faire tourner le tambour de treuil (30) de façon à ajuster la position du pare-vent (18) par rapport au cylindre de ramassage (12).

9. Machine agricole (100) selon l'une quelconque des revendications précédentes, dans laquelle le tambour de treuil (30) comprend en plus un verrou (35) et/ou un cliquet pour bloquer de façon séparable la rotation unidirectionnelle et/ou bidirectionnelle du tambour de treuil (30).

10. Machine agricole (100) selon l'une quelconque des revendications précédentes, dans laquelle le tambour de treuil (30) comprend en plus un actionneur pour faire tourner le tambour de treuil (30) de façon à ajuster la position du pare-vent (18) par rapport au cylindre de ramassage (12).

11. Machine agricole (100) selon la revendication 10, dans laquelle ledit actionneur est un moteur électrique.

12. Machine agricole (100) selon la revendication 11, dans laquelle l'actionneur est un motoréducteur.

13. Machine agricole (100) selon l'une quelconque des revendications 10 à 12, comprenant en plus une unité de commande pour commander à distance ledit actionneur.

14. Machine agricole (100) selon l'une quelconque des revendications précédentes, dans laquelle the au moins un tambour de treuil (30) est fixé de façon rotative à la structure (16) de l'ensemble de ramassage (10).

15. Machine agricole (100) selon l'une quelconque des revendications 1 à 13, dans laquelle le au moins un tambour de treuil (30) est fixé de façon rotative à la structure (101) de la machine agricole (100).

16. Machine agricole (100) selon l'une quelconque des revendications précédentes, dans laquelle la machine agricole est une ramasseuse-presse à balles (100).
